# EUROPEAN PATENT SPECIFICATION

(11) **EP 4 200 702 B1**
(45) Date of publication and mention of the grant of the patent: **29.05.2024**
(21) Application number: 20772049.1
(22) Date of filing: 14.09.2020
(51) Int. Cl.: G06F 11/10

(54) **FAULT RESISTANT VERIFICATION**
FEHLERRESISTENTE ÜBERPRÜFUNG
VÉRIFICATION RÉSISTANTE AUX FAUTES

(43) Date of publication of application: 28.06.2023
(73) Proprietor: Huawei Technologies Co., Ltd., Shenzhen, Guangdong 518129 (CN)
(72) Inventor: KURD, Tariq, 80992 Munich (DE)
(74) Representative: Goddar, Heinz J.
(86) International application number: PCT/EP2020/075620
(87) International publication number: WO 2022/053157

(56) References cited:
- US-A1- 2008 005 646
- US-A1- 2017 147 431
- US-A1- 2018 329 776
- US-A1- 2019 097 654
- US-B2- 7 191 379

## Description

### FIELD OF THE INVENTION

This invention relates to the verification of error check data and the detection of faults in data processing systems, for example in a security central processing unit.

### BACKGROUND

Faults can occur in data processing devices such as security central processing units (CPU). These faults can lead to undesirable behaviour of the system. For example, a fault in such a system can lead to an incorrect instruction being run, which can give an unexpected result.

Faults can be introduced accidentally or deliberately. An example of an accidental fault is one caused by a high energy particle or beam, such as a cosmic ray, that strikes a part of the processing system, causing it to malfunction. Variations in characteristics or performance of a component device of a processing system, for example due to small feature size, can introduce faults into the processing system.

Examples of deliberate fault injection are those caused by laser probing (such as heating up at least a portion of the processing system using a laser) and introducing glitches in the power supply to the processing system. Deliberate fault injection can be used to try to achieve unexpected behaviour in the processing system. If a processing system runs incorrect instructions, an attacker can use this to try to compromise the processing system. This can help an attacker gain control of the processing system and/or reveal details of the operation of the processing system.

A security CPU is implemented within a secure subsystem, where it has a local memory. The local memory is accessible from outside the subsystem, but the access from other components is very restricted. The security CPU authenticates code and copies it to the local memory before it executes it.

Injected faults can corrupt the memory contents, corrupt memory write data between the core and memory, corrupt read data between the memory and the core and corrupt the memory address used to access the memory.

It is desirable to provide secure systems which can prevent or reduce the number of instances of an attacker gaining access to the secret information.

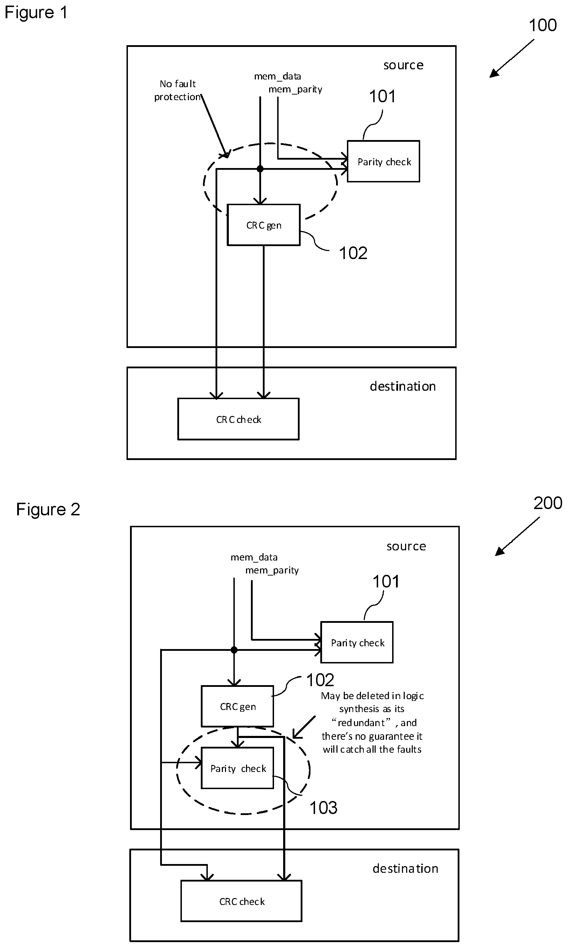

As shown in Figure 1, in a system 100, data is read from the memory and returned to the requesting CPU. The memory is parity protected. In this example, every 32-bits of data have 4-bits of parity, each parity bit protecting one byte of data. The parity is checked at 101. The strength of the protection is increased by adding a strong Cyclic Redundancy Check (CRC) signature. A CRC remainder is calculated at 102. For example, the polynomial 0x8f8 can be used to generate a 12-bit remainder which will detect all 1/2/3/4-bit faults in up to 53-bits of data. It is too expensive to store a 12-bit CRC in the memory alongside every 32-bits of data. However, the load data is not adequately protected between the parity check and the CRC generation. Faults may be injected, resulting in the CRC being calculated on incorrect data.

As illustrated in Figure 2, in another known system 200, it can be confirmed that the original parity is still correct after CRC generation. This parity check is shown at 103. However, this adds to the logic area and the parity check may be deleted in synthesis.

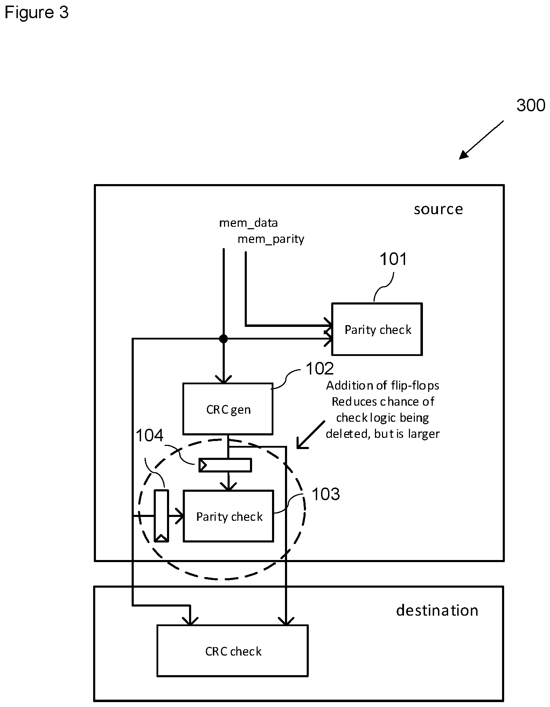

As illustrated in Figure 3, in another known system 300, flip-flops 104 can be used to ensure that the parity check does not get deleted. However, this costs more in area of the device.

It is desirable to develop a method of detecting faults injected into the CRC generation logic that overcomes these problems.

US 7,191,379 B2 discloses embodiments that are implemented in memory systems. In one embodiment, the memory comprises an array of memory cells and a control circuit. The control circuit is configured to read error correction coded data from the array of memory cells, provide error correction code decoding to selected error correction coded data and discard unused error correction code parity data of unselected error correction coded data.

US 2019/097654 A1 discloses a decoding method that includes calculating cyclic redundancy check (CRC) parity bits for data on-the-fly; performing a low-density parity-check (LDPC) decoding for the data; if it is determined that an iteration of is finished, updating the calculated CRC parity bits to generate CRC parity bits; comparing the generated CRC parity bits with CRC bits included in the data; and terminating the LDPC decoding based on the comparison result.

US 2018/329776 A1 discloses a non-volatile memory apparatus that includes an error checking and correcting (ECC) decoding circuit, a main buffer circuit, a multiplexer, and an interface circuit. The ECC decoding circuit decodes an original codeword to obtain a decoded codeword. The main buffer circuit is coupled to the ECC decoding circuit for receiving and storing a first data portion of the decoded codeword. The multiplexer's first input end is coupled to the output end of the main buffer circuit. The second input end of the multiplexer is coupled to the output end of the ECC decoding circuit. The interface circuit is coupled to the output end of the multiplexer and receives the first data portion from the multiplexer to provide the first data portion to a host.

US 2008/005646 A1 discloses embodiments that are generally directed to improving the reliability, availability, and serviceability of a memory device. In some embodiments, a memory device includes a memory core having a first portion to store data bits and a second portion to store error correction code (ECC) bits corresponding to the data bits. The memory device may also include error correction logic on the same die as the memory core. In some embodiments, the error correction logic enables the memory device to compute ECC bits and to compare the stored ECC bits with the computed ECC bits.

US 2017/147431 A1 discloses a memory sub-system that includes a memory controller having error correction code (ECC) encoder/decoder logic. The memory controller may be configured to embed link ECC parity bits in unused data mask bits and/or in a mask write data during a mask write operation. The memory controller may also be configured to protect at least a location of the link ECC parity bits during the mask write operation.

### SUMMARY

The invention is defined by the appended independent claims.

According to one aspect there is provided a data processor for verifying received data, the data processor being configured to: receive a data unit comprising data bits and error check data for the data unit; compute a first verification value over the data bits of the received data unit; compute a second verification value over the data bits of the received data unit and the first verification value; compare the second verification value and the received error check data; and verify the received data unit in dependence on that comparison. This may allow faults in the received error check data to be identified.

The second verification value may offer stronger protection than the first verification value. The first verification value may offer relatively weak protection compared to the second verification value. For example, the first verification value may be a parity and the second verification value may be a CRC remainder. The CRC remainder offers stronger protection against faults than the parity (which offers relatively weak protection). This may provide improved protection against faults.

The received data unit may comprise an instruction and the data processor may be configured to execute the instruction only if the result of the comparison is that the second verification value matches the received error check data. This may prevent a fault from corrupting a system or prevent an attacker from being able to influence or control the operation of a processing device in fetching instructions from memory without such influence or control being detected. Once a fault has been detected, steps can be taken to reassert authorised control and limit the effect of the attack or other fault.

The first verification value may have a bit length L1. The second verification value may have a bit length L2. L2 may be greater than L1. L1 may be 1. This may be an efficient implementation where the CRC check is performed on data plus 1-bit parity.

The data processor may be configured to: receive multiple data units each comprising data bits and error check data for that data unit; compute a respective first verification value over the data bits of each received data unit; compute a second verification value over the data bits of the multiple received data units and the first verification values. Multiple bits of data plus parity may therefore be covered in a single CRC check.

The data processor may be configured to compute the first verification value using a parity check algorithm. Using parity protection may be a convenient implementation.

The data processor may be configured to compute the second verification value using a cyclic redundancy check (CRC) algorithm. This may be an efficient manner of computing a verification value having stronger protection. The CRC algorithm may generate a CRC remainder. This may efficiently compress the information. A CRC check can detect any number of bit errors, depending on the polynomial used for the CRC check.

The data processor may be configured to receive the received data over a data link. The data link may be coupled to a memory system. This may allow data to be transported between the memory system and the data processor.

The data link may be a memory bus. This may be an efficient way of transporting data between the components of the system.

The data processor may be configured to receive the data bits and the error check data in parallel over the data link. This may allow the data units and the error check values to be passed to the processor simultaneously.

According to another aspect there is provided a memory system comprising a data store and a transmit interface that is coupled to a data link, the transmit interface being configured to: receive from the data store a first data unit and first error check data for the first data unit; compute a first verification value over the first data unit; compare the first verification value and the first error check data; if the first verification value matches the first error check data: (i) compute a second verification value over the first data unit and one of the first error check data and the first verification value; and (ii) transmit the first data unit and the second verification value over the data link.

The second verification value may offer stronger protection than the first verification value. The first verification value may offer relatively weak protection compared to the second verification value. For example, the first verification value may be a parity and the second verification value may be a CRC remainder. The CRC remainder offers stronger protection against faults than the parity (which offers relatively weak protection). This may provide improved protection against faults.

The first verification value may have a bit length L1. The second verification value may have a bit length L2. L2 may be greater than L1.

The transmit interface may be configured to compute the first verification value using a parity check algorithm. Using parity protection may be a convenient implementation.

The transmit interface may be configured to compute the second verification value using a cyclic redundancy check algorithm. This may be an efficient manner of computing a verification value having stronger protection. The CRC algorithm may generate a CRC remainder. This may efficiently compress information. A CRC check can detect any number of bit errors, depending on the polynomial used for the CRC check.

The data link may be coupled to a data processor. The memory system may be responsive to requests from the data processor to retrieve data stored in the data store. This may allow the processor to fetch data from a specified location in a memory.

The data link may be a memory bus. This may be an efficient way of transporting data between the components of the data processing device.

According to a further aspect there is provided a computing system comprising a data processor and a memory system as described above, the data processor being configured to receive the said data unit from the memory system. This may prevent a fault from corrupting the system or prevent an attacker from being able to influence or control the operation of a processing module in fetching instructions from memory without such influence or control being detected. Once a fault has been detected, steps can be taken to reassert authorised control and limit the effect of the attack or other fault. This may prevent a faulty instruction from updating state in the CPU as a result of an accidental or deliberate fault.

### BRIEF DESCRIPTION OF THE FIGURES

The present invention will now be described by way of example with reference to the accompanying drawings.

In the drawings:
Figure 1 shows an example of a known system comprising a source, such as a memory, and a destination device, such as an execution core. At the memory, the parity is checked and the CRC remainder is calculated before sending data back to the core.
Figure 2 shows a known solution where it is confirmed that the original parity is still correct after CRC generation.
Figure 3 shows a known solution where flip-flops can be used to ensure the parity check is not deleted.
Figure 4 illustrates an example of the solution described herein, wherein the core calculates the parity from the received data and checks the CRC remainder against the data from the bus and the locally calculated parity.
Figure 5 shows an example of a Hi2120CS NB-loT data processing device comprising a HiMiDeerSV100 RISC-V execution core and a memory communicatively coupled to the execution core via a data path.
Figure 6 shows an exemplary flowchart detailing the method steps performed by a data processor.
Figure 7 shows an exemplary flowchart detailing the method steps performed by a transmit interface of a memory system.

### DETAILED DESCRIPTION

It is desirable to provide secure systems which can prevent or reduce the number of instances of an attacker gaining access to secret information. In general, it is desirable to prevent an attacker from being able to influence or control the operation of a processing module in fetching instructions from memory without such influence or control being detected. Once it is detected, steps can be taken to reassert authorised control and limit the effect of the attack or other fault.

The present disclosure relates to a method for determining whether an error check, such as a Cyclic Redundancy Check (CRC), has been corrupted.

In general, in a system comprising a processing device (such as an execution core) and a memory system, a data signal which is weakly protected against fault injection (for example, using parity) is received by the processing device from the memory system. The system converts the weakly protected signal (for example parity protected signal) to a strongly protected signal (for example, using CRC). In the system described herein, the conversion of the weakly protected signal to the strongly protected signal includes the weak protection signal as part of the input data used to calculate the strong protection signal. The core receives the created stronger signal and checks for faults by recreating the weak protection signal (which is preferably not sent directly to the core) as part of the checking process, and using it as an input to the strong protection check.

The stronger protection value is expensive to store in the memory, so it is preferably calculated after reading the memory data. Expensive can mean, for example, occupying more bits of storage in the memory, or it may be more costly to update in the memory.

The core therefore receives a data unit comprising data bits and error check data (such as a CRC remainder) for the data unit. The core computes a first verification value, such as a parity check value, over the data bits of the received data unit. The first verification value may have a bit length L1. It also computes a second verification value (such as a further CRC remainder that can compared to the received error check data) over the data bits of the received data unit and the first verification value. The second verification value may have a bit length L2. In a preferred implementation, L2 is greater than L1. However, L2 may alternatively be equal to or less than L1. The core then compares the second verification value and the received error check data and verifies the received data unit in dependence on that comparison.

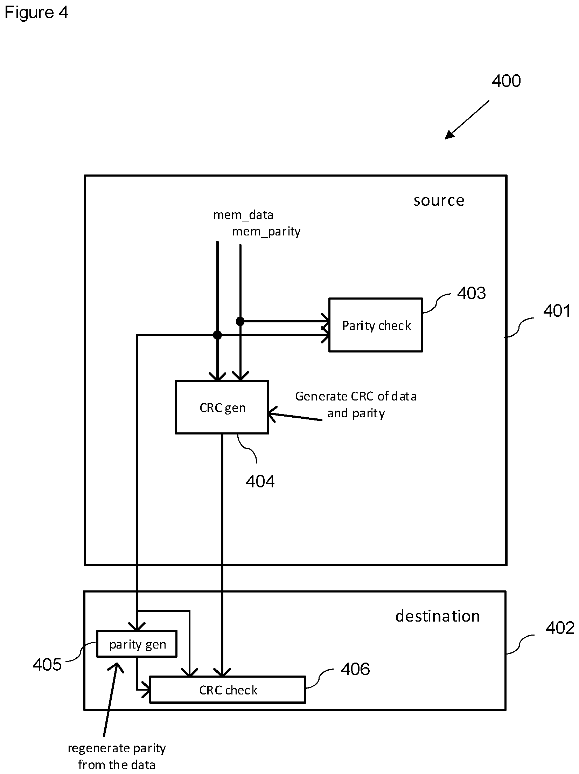

As illustrated in further detail in the example shown in Figure 4, the data unit may be fetched from a location in a data store of a memory system 401. In this example, the first verification value is a parity value and the second verification value is a CRC remainder. CRC gives much better protection that parity for the same number of bits (or possibly even using fewer bits). However, a stronger verification value such as a CRC remainder may be too expensive to store in the memory. Parity gives the ability to write individual bytes in the memory. Therefore, in one implementation, 1-bit parity can be stored in the memory per byte of data.

When the read data and parity from the memory are returned to the CPU 402, the parity is checked near the data store at a transmit interface of the memory system to detect errors in the read data, as shown at 403. A CRC remainder (the error check data) is generated at 404. When the CRC remainder is generated, it includes the parity read from the memory, as well as the data it is protecting. In a preferred implementation, the parity is not returned to the core, because it can be regenerated from the data. As shown at 405, the parity is reconstructed from the data when the CRC is checked at 406.

The parity is thus included in the CRC remainder generation to protect the read data on the way to the CPU. In one example, a CRC12 remainder can be generated from 32-bit data and 4-bit parity (and optionally also the memory address). When the core checks the CRC12, it calculates the parity from the received data and checks the CRC12 against the data from the bus and the locally calculated parity (and optionally also the address of the data in the memory).

In the above example, CRC12 remainders are generated for each 16-bits of data. Longer CRC lengths may give improved protection. However, other CRC lengths, such as CRC6 remainders, may be used.

Therefore, CRC remainders are generated from not only the data but also from the parity. This means that when the data is received at the core, the parity is reconstructed from the received data and used to check the CRC remainder. This avoids requiring additional copies of the CRC check logic to check that the CRC was generated correctly.

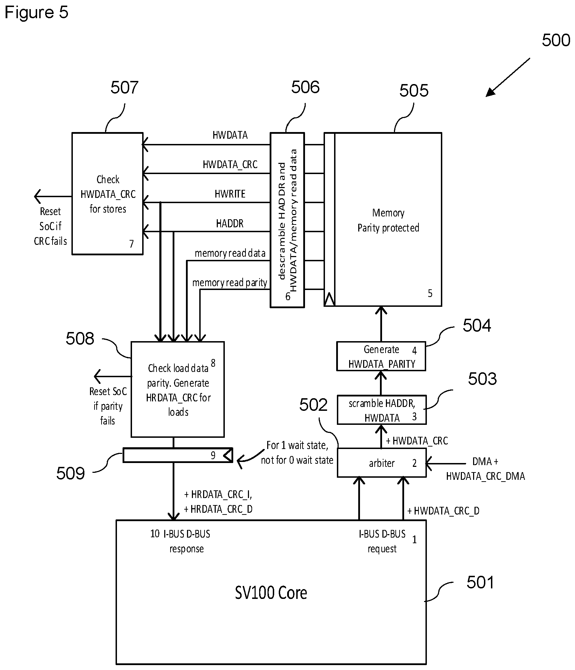

Figure 5 shows an example of a Hi2120CS NB-loT data processing device 500 comprising a HiMiDeerSV100 RISC-V execution core 501 and a memory 505 communicatively coupled to the execution core via a data path, which in this example is a bus. The memory 505 is configured to store a respective one of a plurality of data units at a respective one of a plurality of locations. In this example, the memory 505 is parity protected.

The memory is configured to receive, from the execution core 501, a request to fetch data from a location in the data store of memory 505. The request may include data specifying the location of the data in the memory 505.

The bus conveys the retrieved data unit(s) and determined error check value(s) from the memory system 505 to the execution core 501.

In the example shown in Figure 5, the AHB (Advanced High-performance Bus) signals are as follows. A HWDATA_CRC is generated from HWDATA (write data), parity generated from the register file and HADDR (request address). HRDATA_CRC is generated at the memory from HRDATA (read data), parity from the memory and HADDR (address) and is checked in the core.

As shown in Figure 5, in a first step, the SV100 core 501 makes a bus request (I-BUS and / or D-BUS). HWDATA_CRC signals are added to the AHB, which in this example are CRC12 (polynomial 0x8f8) generated from HADDR (request address) and HWDATA (store data) and are invalid for loads. The arbiter 502 selects a bus request, and passes it to block 503. At block 503, which may act as an input interface for the memory system, the memory address and data is scrambled before accessing the memory. Block 504 generates parity to write to the memory. The memory 505 is then accessed.

At block 506, HADDR, HWDATA and HRDATA (memory read data) are descrambled. At block 507, HWDATA_CRC is checked for stores. At block 508, the load data parity is checked from the memory and HRDATA_CRC for the loads is generated to return to the core from HADDR, and HRDATA (read data). At block 509, the response signals are registered, if necessary for timing. When the data is received back at the core 501, the parity is reconstructed from the received data and used to check the CRC remainder.

The method described herein therefore protects the read data in block 508 during CRC generation and provides a low cost, simple method for avoiding fault injection in CRC generation.

As discussed above, the returned CRC may be checked using the returned data and an independently calculated value of the parity, and may cause an alarm to fire on failure of the check.

Where a fault occurs (i.e. when the check fails), it may be desirable to try to correct that fault and to carry on with accessing the memory. An alternative is to stop the process on fault detection. Where a fault is deliberately introduced, processing can be stopped, the fault reviewed and the processing core or module reset to clear the fault.

The execution core may be configured to raise an error if a fault is detected. For example, in response to detecting an error, the execution core may be configured to raise the error such that execution is halted. If a fault is detected, an instruction running on the processor may be prevented from completing, so as to prevent the faulty instruction from updating state in the CPU.

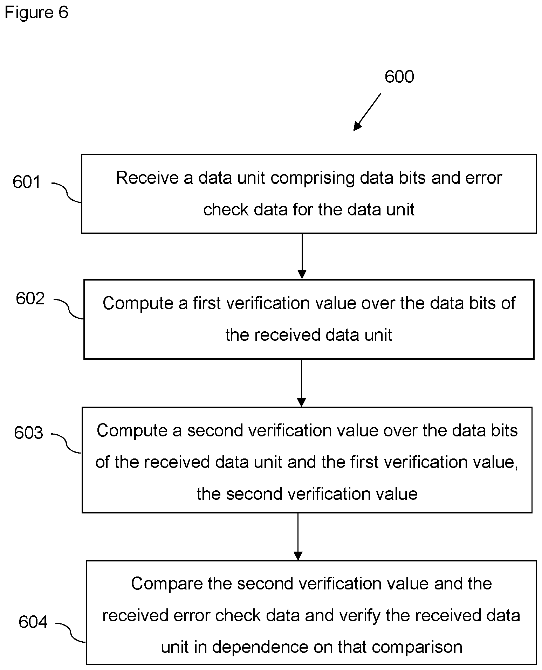

Figure 6 summarizes an example of a method 600 in which the following steps are performed by the data processor. At step 601, the method comprises receiving a data unit comprising data bits and error check data for the data unit. At step 602, the method comprises computing a first verification value over the data bits of the received data unit. At step 603, the method comprises computing a second verification value over the data bits of the received data unit and the first verification value. At step 604, the second verification value and the received error check data are compared and the received data unit is verified in dependence on that comparison.

In further optional steps, the method performed by the data processor may comprise receiving multiple data units each comprising data bits and error check data for that data unit. The method may further comprise computing a respective first verification value over the data bits of each received data unit. The method may further comprise computing a second verification value over the data bits of the multiple received data units and the first verification values.

For example, in one embodiment, 4 bytes may be read from the memory, each having a single bit of parity. The CRC may be calculated across the 32-bit data and 4-bit parity.

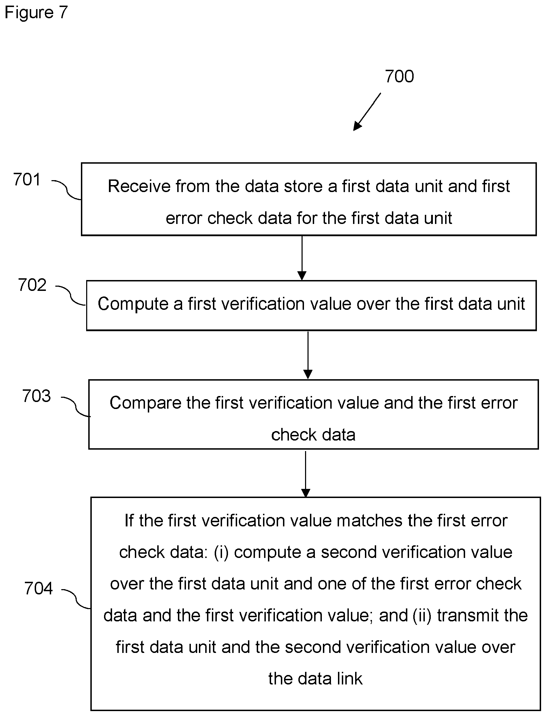

Figure 7 summarizes a method 700 in which the following steps are performed by the transmit interface of the memory system comprising a data store. At step 701, the method comprises receiving from the data store (such as the memory 505 described above) a first data unit and first error check data for the first data unit. At step 702, the method comprises computing a first verification value over the first data unit. At step 703, the method comprises comparing the first verification value and the first error check data. At step 704, if the first verification value matches the first error check data, the method comprises: (i) computing a second verification value over the first data unit and one of the first error check data and the first verification value; and (ii) transmitting the first data unit and the second verification value over the data link.

Therefore, in the system and method described herein, the parity is checked in the CRC calculation. This only requires a single copy of the CRC check logic and has negligible area impact on the CRC generation or check logic. The techniques described herein may be useful in various security CPUs, for example in HiMiDeerSVxxx security CPUs which form part of the Huawei product line.

This technique can protect load data at all points between the memory read and the CRC check in a CPU. It can also protect write data from the core to the memory. In general, it covers the transition from weak protection (for example, parity) to strong protection (for example, CRC).

The method may also be used to protect write data from the CPU to the memory. Here, the parity from the CPU register file may be included in the CRC generation used to send the write data to the memory. The parity can then be recalculated in the memory system, and the CRC remainder checked as above. Therefore, in this case, the memory system is configured to: receive a data unit from the data processor comprising data bits and error check data for the data unit; compute a first verification value over the data bits of the received data unit; compute a second verification value over the data bits of the received data unit and the first verification value; compare the second verification value and the received error check data; and verify the received data unit in dependence on that comparison.

Compared to checking the parity after the CRC generation, which means extra checking logic which increases the area, the check only needs to be performed once, not twice (i.e. once after generation, once after receiving the response). In the method described herein, checking the parity at the same time as the CRC is after the CRC generation without any extra physical design or synthesis effort.

The method is generally very cheap. In one example, the same CRC12 polynomial (0x8f8) can detect all 4-bit faults in 48-bits (address[31 :0] and data[16:0]) or 50-bits of (address[31 :0], data[16:0] and parity[1:0]). CRC12 is calculated across each 16-bits of data so that it can be pushed into the I-fetch buffer which is 16-bits wide. This gives much stronger protection than stripping the parity and calculating the CRC12.

The method described above is not only applicable to parity protected memories. CRC protected memories can use the same technique, for example CRC4. Here, the weaker CRC4 protection can be included in the stronger CRC12 protection to return to the core. The CRC4 can then be recreated at the core.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

## Claims

1. A data processor (402, 501) for verifying received data, the data processor being configured to:
receive (601) a data unit comprising data bits and error check data for the data unit;
compute (405, 602) a first verification value over the data bits of the received data unit;
the data processor being **characterised in that** the data processor is configured to:
compute (406, 603) a second verification value over the data bits of the received data unit and the first verification value;
compare (604) the second verification value and the received error check data and verify the received data unit in dependence on that comparison.

2. A data processor as claimed in claim 1, wherein the second verification value offers stronger protection than the first verification value.

3. A data processor as claimed in claim 1 or claim 2, wherein the received data unit comprises an instruction and the data processor is configured to execute the instruction only if the result of the comparison is that the second verification value matches the received error check data.

4. A data processor as claimed in any preceding claim, wherein the first verification value has a bit length L1 and the second verification value has a bit length L2, wherein L2 is greater than L1.

5. A data processor as claimed in any preceding claim, the data processor being configured to:
receive multiple data units each comprising data bits and error check data for that data unit;
compute a respective first verification value over the data bits of each received data unit;
compute a second verification value over the data bits of the multiple received data units and the first verification values.

6. A data processor as claimed in any preceding claim, wherein the data processor is configured to compute the first verification value using a parity check algorithm.

7. A data processor as claimed in any preceding claim, wherein the data processor is configured to compute the second verification value using a cyclic redundancy check algorithm.

8. A data processor as claimed in any preceding claim, wherein the data processor is configured to receive the received data over a data link and the data link is coupled to a memory system (401, 505).

9. A data processor as claimed in claim 8, wherein the data link is a memory bus.

10. A data processor as claimed in claim 8 or 9, wherein the data processor is configured to receive the data bits and the error check data in parallel over the data link.

11. A memory system (401, 505) comprising a data store (505) and a transmit interface (508) that is coupled to a data link, the transmit interface being configured to:
receive (701) from the data store a first data unit and first error check data for the first data unit;
compute (702) a first verification value over the first data unit;
compare (703) the first verification value and the first error check data;
the memory system being **characterised in that** the transmit interface is configured to:
if the first verification value matches the first error check data:
(i) compute a second verification value over the first data unit and one of the first error check data and the first verification value; and
(ii) transmit the first data unit and the second verification value over the data link.

12. A memory system (401, 505) as claimed in claim 11, wherein the second verification value offers stronger protection than the first verification value.

13. A memory system (401, 505) as claimed in claim 11 or claim 12, wherein the first verification value has a bit length L1 and the second verification value has a bit length L2, wherein L2 is greater than L1.

14. A memory system (401, 505) as claimed in any of claims 11 to 13, wherein the transmit interface is configured to compute the first verification value using a parity check algorithm.

15. A computing system comprising a data processor (402, 501) as claimed in any of claims 1 to 10 and a memory system (401, 505) as claimed in any of claims 11 to 14, the data processor being configured to receive the said data unit from the memory system (401, 505).

## Patentansprüche

1. Datenprozessor (402, 501) zum Überprüfen empfangener Daten, wobei der Datenprozessor zu Folgendem konfiguriert ist:
Empfangen (601) einer Dateneinheit, umfassend Datenbits und Fehlerprüfdaten für die Dateneinheit;
Berechnen (405, 602) eines ersten Überprüfungswertes über die Datenbits der empfangenen Dateneinheit;
wobei der Datenprozessor **dadurch gekennzeichnet ist, dass** der Datenprozessor zu Folgendem konfiguriert ist:
Berechnen (406, 603) eines zweiten Überprüfungswertes über die Datenbits der empfangenen Dateneinheit und den ersten Überprüfungswert;
Vergleichen (604) des zweiten Überprüfungswertes und der empfangenen Fehlerprüfdaten und Überprüfen der empfangenen Dateneinheit in Abhängigkeit von diesem Vergleich.

2. Datenprozessor gemäß Anspruch 1, wobei der zweite Überprüfungswert einen stärkeren Schutz als der erste Überprüfungswert bietet.

3. Datenprozessor gemäß Anspruch 1 oder Anspruch 2, wobei die empfangene Dateneinheit eine Anweisung umfasst und der Datenprozessor dazu konfiguriert ist, die Anweisung lediglich auszuführen, wenn das Ergebnis des Vergleichs ist, dass der zweite Überprüfungswert mit den empfangenen Fehlerprüfdaten übereinstimmt.

4. Datenprozessor gemäß einem der vorhergehenden Ansprüche, wobei der erste Überprüfungswert eine Bitlänge L1 und der zweite Überprüfungswert eine Bitlänge L2 aufweist, wobei L2 größer als L1 ist.

5. Datenprozessor gemäß einem der vorhergehenden Ansprüche, wobei der Datenprozessor zu Folgendem konfiguriert ist:
Empfangen mehrerer Dateneinheiten, jeweils umfassend Datenbits und Fehlerprüfdaten für diese Dateneinheit;
Berechnen eines jeweiligen ersten Überprüfungswertes über die Datenbits jeder empfangenen Dateneinheit;
Berechnen eines zweiten Überprüfungswertes über die Datenbits der mehreren empfangenen Dateneinheiten und die ersten Überprüfungswerte.

6. Datenprozessor gemäß einem der vorhergehenden Ansprüche, wobei der Datenprozessor dazu konfiguriert ist, den ersten Überprüfungswert unter Verwendung eines Paritätsprüfalgorithmus zu berechnen.

7. Datenprozessor gemäß einem der vorhergehenden Ansprüche, wobei der Datenprozessor dazu konfiguriert ist, den zweiten Überprüfungswert unter Verwendung eines zyklischen Redundanzprüfalgorithmus zu berechnen.

8. Datenprozessor gemäß einem der vorhergehenden Ansprüche, wobei der Datenprozessor dazu konfiguriert ist, die empfangenen Daten über eine Datenverbindung zu empfangen, und die Datenverbindung mit einem Speichersystem (401, 505) gekoppelt ist.

9. Datenprozessor gemäß Anspruch 8, wobei die Datenverbindung ein Speicherbus ist.

10. Datenprozessor gemäß Anspruch 8 oder 9, wobei der Datenprozessor dazu konfiguriert ist, die Datenbits und die Fehlerprüfdaten parallel über die Datenverbindung zu empfangen.

11. Speichersystem (401, 505), umfassend einen Datenspeicher (505) und eine Übertragungsschnittstelle (508), die mit einer Datenverbindung gekoppelt ist, wobei die Übertragungsschnittstelle zu Folgendem konfiguriert ist:
Empfangen (701) einer ersten Dateneinheit und erster Fehlerprüfdaten für die erste Dateneinheit aus dem Datenspeicher;
Berechnen (702) eines ersten Überprüfungswertes über die erste Dateneinheit;
Vergleichen (703) des ersten Überprüfungswerts und der ersten Fehlerprüfdaten;
wobei das Speichersystem **dadurch gekennzeichnet ist, dass** die Übertragungsschnittstelle zu Folgendem konfiguriert ist:
wenn der erste Überprüfungswert mit den ersten Fehlerprüfdaten übereinstimmt:
(i) Berechnen eines zweiten Überprüfungswertes über die erste Dateneinheit und einen von den ersten Fehlerprüfdaten und den ersten Überprüfungswert; und
(ii) Übertragen der ersten Dateneinheit und des zweiten Überprüfungswertes über die Datenverbindung.

12. Speichersystem (401, 505) gemäß Anspruch 11, wobei der zweite Überprüfungswert einen stärkeren Schutz bietet als der erste Überprüfungswert.

13. Speichersystem (401, 505) gemäß Anspruch 11 oder Anspruch 12, wobei der erste Überprüfungswert eine Bitlänge L1 und der zweite Überprüfungswert eine Bitlänge L2 aufweist, wobei L2 größer als L1 ist.

14. Speichersystem (401, 505) gemäß einem der Ansprüche 11 bis 13, wobei die Übertragungsschnittstelle dazu konfiguriert ist, den ersten Überprüfungswert unter Verwendung eines Paritätsprüfalgorithmus zu berechnen.

15. Computersystem, umfassend einen Datenprozessor (402, 501) gemäß einem der Ansprüche 1 bis 10 und ein Speichersystem (401, 505) gemäß einem der Ansprüche 11 bis 14, wobei der Datenprozessor dazu konfiguriert ist, die Dateneinheit von dem Speichersystem (401, 505) zu empfangen.

## Revendications

1. Processeur de données (402, 501) pour vérifier des données reçues, le processeur de données étant configuré pour :
recevoir (601) une unité de données comprenant des bits de données et des données de contrôle d'erreur pour l'unité de données ;
calculer (405, 602) une première valeur de vérification sur les bits de données de l'unité de données reçue ;
le processeur de données étant **caractérisé en ce que** le processeur de données est configuré pour :
calculer (406, 603) une seconde valeur de vérification sur les bits de données de l'unité de données reçue et la première valeur de vérification ;
comparer (604) la seconde valeur de vérification et les données de contrôle d'erreur reçues et vérifier l'unité de données reçue en fonction de cette comparaison.

2. Processeur de données selon la revendication 1, dans lequel la seconde valeur de vérification offre une protection plus forte que la première valeur de vérification.

3. Processeur de données selon la revendication 1 ou la revendication 2, dans lequel l'unité de données reçue comprend une instruction et le processeur de données est configuré pour exécuter l'instruction uniquement si le résultat de la comparaison est que la seconde valeur de vérification correspond aux données de contrôle d'erreur reçues.

4. Processeur de données selon une quelconque revendication précédente, dans lequel la première valeur de vérification a une longueur binaire L1 et la seconde valeur de vérification a une longueur binaire L2, dans lequel L2 est supérieure à L1.

5. Processeur de données selon une quelconque revendication précédente, le processeur de données étant configuré pour :
recevoir de multiples unités de données comprenant chacune des bits de données et des données de contrôle d'erreur pour cette unité de données ;
calculer une première valeur de vérification respective sur les bits de données de chaque unité de données reçue ;
calculer une seconde valeur de vérification sur les bits de données des multiples unités de données reçues et les premières valeurs de vérification.

6. Processeur de données selon une quelconque revendication précédente, dans lequel le processeur de données est configuré pour calculer la première valeur de vérification à l'aide d'un algorithme de contrôle de parité.

7. Processeur de données selon une quelconque revendication précédente, dans lequel le processeur de données est configuré pour calculer la seconde valeur de vérification à l'aide d'un algorithme de contrôle de redondance cyclique.

8. Processeur de données selon une quelconque revendication précédente, dans lequel le processeur de données est configuré pour recevoir les données reçues sur une liaison de données et la liaison de données est couplée à un système de mémoire (401, 505) .

9. Processeur de données selon la revendication 8, dans lequel la liaison de données est un bus mémoire.

10. Processeur de données selon la revendication 8 ou 9, dans lequel le processeur de données est configuré pour recevoir les bits de données et les données de contrôle d'erreur en parallèle sur la liaison de données.

11. Système de mémoire (401, 505) comprenant un magasin de données (505) et une interface de transmission (508) qui est couplée à une liaison de données, l'interface de transmission étant configurée pour :
recevoir (701) du magasin de données une première unité de données et des premières données de contrôle d'erreur pour la première unité de données ;
calculer (702) une première valeur de vérification sur la première unité de données ;
comparer (703) la première valeur de vérification et les premières données de contrôle d'erreur ;
le système de mémoire étant **caractérisé en ce que** l'interface de transmission est configurée pour :
si la première valeur de vérification correspond aux premières données de contrôle d'erreur :
(i) calculer une seconde valeur de vérification sur la première unité de données et l'une des premières données de contrôle d'erreur et de la première valeur de vérification ; et
(ii) transmettre la première unité de données et la seconde valeur de vérification sur la liaison de données.

12. Système de mémoire (401, 505) selon la revendication 11, dans lequel la seconde valeur de vérification offre une protection plus forte que la première valeur de vérification.

13. Système de mémoire (401, 505) selon la revendication 11 ou la revendication 12, dans lequel la première valeur de vérification a une longueur binaire L1 et la seconde valeur de vérification a une longueur binaire L2, dans lequel L2 est supérieure à L1.

14. Système de mémoire (401, 505) selon l'une quelconque des revendications 11 à 13, dans lequel l'interface de transmission est configurée pour calculer la première valeur de vérification à l'aide d'un algorithme de contrôle de parité.

15. Système informatique comprenant un processeur de données (402, 501) selon l'une quelconque des revendications 1 à 10 et un système de mémoire (401, 505) selon l'une quelconque des revendications 11 à 14, le processeur de données étant configuré pour recevoir ladite unité de données du système de mémoire (401, 505).
